# EUROPÄISCHE PATENTSCHRIFT

(11) **EP 3 437 806 B1**
(45) Veröffentlichungstag und Bekanntmachung des Hinweises auf die Patenterteilung: **22.03.2023**
(21) Anmeldenummer: 18177516.4
(22) Anmeldetag: 13.06.2018
(51) Int. Cl.: B25J 9/16, B25J 11/00, B67D 7/04

(54) **KRAFTFAHRZEUG UND VERFAHREN ZUM STEUERN EINES ROBOTERS**
MOTOR VEHICLE AND METHOD FOR CONTROLLING A ROBOT
VÉHICULE AUTOMOBILE ET PROCÉDÉ DE COMMANDE D'UN ROBOT

(30) Priorität: 31.07.2017 DE 102017213161; 11.01.2018 DE 102018200435
(43) Veröffentlichungstag der Anmeldung: 06.02.2019
(73) Patentinhaber: VOLKSWAGEN AKTIENGESELLSCHAFT, 38440 Wolfsburg (DE)
(72) Erfinder: Herold, Stephan, 38106 Braunschweig (DE); Schütz, Daniel, 38165 Lehre (DE)

(56) Entgegenhaltungen:
- EP-A2- 1 345 099
- DE-A1-102012 024 865
- TestDriven: "VW e-smartConnect", You Tube, 15. Juli 2015 (2015-07-15), Seite 1, XP054977524, Gefunden im Internet: URL:https://www.youtube.com/watch?v=Y4rDGJ -DH1Q [gefunden am 2017-07-06]

## Beschreibung

Die Erfindung betrifft ein Kraftfahrzeug der im Oberbegriff des Patentanspruchs 1 angegebenen Art. Des Weiteren betrifft die Erfindung ein Verfahren zum Steuern eines Roboters.

Heutzutage werden Roboter in verschiedensten Anwendungsbereichen eingesetzt. Beispielsweise wird in der Automobilproduktion eine Vielzahl von Robotern, beispielsweise zum Setzen von Schweißnähten, bei Montagevorgängen oder dergleichen eingesetzt. Genauso werden insbesondere bei elektrisch angetriebenen Fahrzeugen vermehrt Roboter eingesetzt, um Aufladevorgänge zu unterstützen. Üblicherweise ist es je nach Aufgabenstellung, welche von den Robotern zu erledigen ist, notwendig, dass die Roboter eine mehr oder weniger aufwendige Steuereinrichtung, also eine Steuerungshardware, aufweisen.

Die Verwendung eines Roboters zum Befüllen eines Energiespeichers eines Kraftfahrzeugs ist beispielweise in der DE 10 2012 024 865 A1 gezeigt. Es wird eine drahtlose Kommunikation zwischen einem fahrzeugseitigen Steuersystem und dem Roboter zum Übermitteln von Daten initiiert. Dadurch können unter anderem Positionsdaten von dem Roboter zu dem Fahrzeug oder auch von dem Fahrzeug zu dem Roboter übermittelt werden. Dafür weist das Fahrzeug eine Datenschnittstelle zum Übertragen der besagten Daten an den Roboter auf. Bevorzugt sollen Positionsdaten von dem Roboter an das Fahrzeug übermittelt werden, sodass sich das Fahrzeug anschließend autonom zu dem Roboter positionieren kann.

Die DE 10 2016 006 555 A1 zeigt eine Dockingstation zum Aufnehmen und Aufladen einer Drohne im Bereich eines Dachs eines Kraftfahrzeugs. Mittels der Dockingstation kann ein Energiespeicher der Drohne aufgeladen werden, solange sie an der Dockingstation angedockt ist.

Die US 2016/0271796 A1 zeigt ein System zum Lackieren eines Kraftfahrzeugs. Mittels einer Drohne wird die Positionierung und Ausrichtung des Kraftfahrzeugs ermittelt. Diesbezügliche Daten werden an eine fahrzeugexterne Steuereinrichtung übertragen, welche in Abhängigkeit davon einen Lackierroboter ansteuert, der daraufhin das Kraftfahrzeug lackiert.

Es ist die Aufgabe der vorliegenden Erfindung, eine besonders effiziente Lösung zum Betreiben von Robotern bereitzustellen.

Diese Aufgabe wird durch ein Kraftfahrzeug sowie durch ein Verfahren zum Steuern eines Roboters mit den Merkmalen der unabhängigen Patentansprüche gelöst. Vorteilhafte Ausgestaltungen mit zweckmäßigen und nicht trivialen Weiterbildungen der Erfindung sind in den abhängigen Ansprüchen angegeben.

Das erfindungsgemäße Kraftfahrzeug umfasst eine Datenschnittstelle zum Übertragen von Daten an einen Roboter. Das erfindungsgemäße Kraftfahrzeug zeichnet sich durch eine Steuereinrichtung aus, welche dazu eingerichtet ist, für eine vorgegebene Arbeitsaufgabe Steuersignale zum Steuern des Roboters zu erzeugen und über die Datenschnittstelle an den Roboter zu übertragen. Dadurch ist es möglich, dass eine Steuerungs- und Regelungshardware des Roboters, zum Beispiel für Produktionsanwendungen oder Serviceleistungen, entfallen kann, indem die Steuerungshardware des Kraftfahrzeugs in Form der Steuereinrichtung zur Steuerung des betreffenden Roboters verwendet wird. Dadurch können die Anschaffungskosten des betreffenden Roboters drastisch reduziert werden. Ein weiterer Vorteil des erfindungsgemäßen Kraftfahrzeugs besteht darin, dass Kraftfahrzeuge zukünftiger Generationen, welche erfindungsgemäß aufgebaut sind, verschiedenste und auch neuartige Funktionalitäten mit einer alten Robotermechanik darstellen können.

Die Datenschnittstelle dient mit anderen Worten also als Kommunikationsschnittstelle zwischen dem Kraftfahrzeug und dem betreffenden Roboter. Der Roboter muss im Idealfall nur noch über Antriebe, Antriebsverstärker und eine mit der fahrzeugseitigen Datenschnittstelle kompatible eigene Datenschnittstelle verfügen. Sämtliche bei herkömmlichen Lösungen bisher erforderliche roboterseitige Steuerungshardware kann aufgrund der erfindungsgemäßen Lösung entfallen, da alle Steuerungsaufgaben des Roboters durch die fahrzeugseitige Steuereinrichtung übernommen werden können. Denn mittels des Kraftfahrzeugs ist eine dezentrale Robotersteuerung möglich.

Die Erfindung sieht zudem vor, dass das Kraftfahrzeug eine Sensorik aufweist, welche dazu ausgelegt ist, eine Pose des Roboters und/oder Achsstellungen des Roboters zu erfassen und diesbezügliche Daten an die Steuereinrichtung zu übertragen, welche dazu eingerichtet ist, in Abhängigkeit von diesen Daten die Steuersignale zu erzeugen. Mit anderen Worten kann also eine sensorgeführte Applikation über die im Fahrzeug vorhandene Fahrzeugsensorik durchgeführt werden. Die fahrzeugseitige Sensorik vermisst die aktuelle Pose des Roboters, vorzugsweise auch eines am Roboter angebrachten Werkzeugs, sowie die Lage der Robotermechanik, insbesondere bezüglich ihrer Achsstellung und/oder bezüglich einer Positionierung und Orientierung einer mobilen Plattform des Roboters, relativ zum Kraftfahrzeug und berechnet alle Informationen zum Erreichen einer Soll-Pose bzw. Soll-Lage. Anschließend übermittelt das Kraftfahrzeug entsprechende Achspositionen zu jedem Steuerungs- bzw. Regeltakt in Form der besagten Steuersignale. Das Kraftfahrzeug übernimmt mit seiner Steuereinrichtung also nicht nur die eigentliche Steuerung des Roboters sondern auch die sensorische Überwachung des Roboters. Dadurch ist beispielsweise eine permanente Positionsüberwachung des Roboters möglich, sodass die Steuereinrichtung in Abhängigkeit von der bekannten Ausrichtung und Positionierung des Roboters entsprechende Steuersignale zum bestmöglichen Erfüllen der besagten Arbeitsaufgabe erzeugen und über die Datenschnittstelle an den Roboter übertragen kann. Die besagte fahrzeugseitige Sensorik wird auch für verschiedenste andere fahrzeugseitige Applikationen, wie beispielsweise autonome Fahraufgaben und dergleichen verwendet. Mit anderen Worten wird also eine ohnehin im Kraftfahrzeug verwendete bzw. verbaute Sensorik noch dafür genutzt, die Pose des Roboters und/oder Achsstellung des Roboters zu erfassen, um den Roboter in Abhängigkeit davon fahrzeugseitig anzusteuern.

Die Steuereinrichtung kann dazu eingerichtet sein, eine Sicherheitsüberwachung des Roboters durchzuführen und in Abhängigkeit von der Sicherheitsüberwachung die Steuersignale zu erzeugen. Die Sicherheitsüberwachung kann beispielsweise in die von der fahrzeugseitigen Sensorik bereitgestellten Daten einfließen, sodass die fahrzeugseitige Steuereinrichtung auch zusätzlich zur Sicherheitsüberwachung und nicht nur zur reinen Steuerung im Hinblick auf die zu erfüllende Arbeitsaufgabe eingesetzt werden kann. Beispielsweise ist es dadurch möglich, am Roboter selbst gar keine Sensorik zur Sicherheitsüberwachung und/oder zur Erledigung einer bestimmten Arbeitsaufgabe vorzusehen. Stattdessen wird die gesamte diesbezügliche Sensorik fahrzeugseitig bereitgestellt und von der Steuereinrichtung genutzt, um solche Steuersignale zum Steuern des Roboters bereitzustellen, mittels welchen zum einen die vorgegebene Arbeitsaufgabe besonders gut und effizient und zum anderen auch sicher erledigt werden kann.

Gemäß einer vorteilhaften Ausführungsform der Erfindung ist es vorgesehen, dass die Datenschnittstelle dazu ausgelegt ist, die Steuersignale mittels eines kabellosen und/oder kabelgebundenen Übertragungsverfahrens an den Roboter zu übertragen. Sowohl die fahrzeugseitige Datenschnittstelle als auch die damit kompatible roboterseitige Datenschnittstelle können beispielsweise in Form einer Stecker-Buchsen-Paarung oder dergleichen ausgebildet sein, sodass eine kabelgebundene Datenübertragung der Steuersignale erfolgen kann. Alternativ oder zusätzlich ist es auch möglich, dass beispielsweise kabellose Übertragungsverfahren, beispielsweise über eine Mobilfunkverbindung, wie beispielsweise LTE oder dergleichen, WLAN, über eine Car-2-X-Schnittstelle, oder dergleichen verwendet werden. Je nach Randbedingungen und für die Steuerung des Roboters erforderlicher Bandbreite kann das geeignete Übertragungsverfahren ausgewählt werden.

In weiterer vorteilhafter Ausgestaltung der Erfindung ist es vorgesehen, dass die Steuereinrichtung dazu eingerichtet ist, wenigstens eine Fahrzeugfunktion, insbesondere zum autonomen Fahren des Kraftfahrzeugs, zu steuern. Die Steuereinrichtung ist also vorzugsweise nicht nur alleine dazu da und dazu eingerichtet, den Roboter zu steuern. Vielmehr dient die Steuereinrichtung auch dazu, eine oder verschiedene Fahrzeugfunktionen des Kraftfahrzeugs beim normalen Fahrzeugbetrieb zu steuern, wie beispielsweise autonome Fahrfunktionen, andere Fahrerassistenzsysteme, Infotainmentsysteme oder dergleichen. Der fahrzeugseitigen Steuereinrichtung kommt also zumindest eine Doppelfunktionalität zu, nämlich zum einen die Steuerung des Roboters und zum anderen auch die Steuerung des Kraftfahrzeugs an sich. Hardwareseitig wird dadurch das Kraftfahrzeug also gar nicht oder nur marginal teurer, da eine ohnehin zum Fahrzeugbetrieb erforderliche Steuereinrichtung zusätzlich noch zur Steuerung des Roboters verwendet wird.

Eine weitere vorteilhafte Ausführungsform der Erfindung sieht vor, dass die Steuereinrichtung dazu eingerichtet ist, über die Datenschnittstelle roboterspezifische Parameter zum Steuern des Roboters zu laden. Beispielsweise ist es möglich, dass die fahrzeugseitige Datenschnittstelle dazu ausgelegt ist, via Internet auf eine Datenbank zuzugreifen, und die besagten roboterspezifischen Parameter herunterzuladen, welche zum Steuern des Roboters erforderlich sind bzw. zu beachten sind. Alternativ oder zusätzlich ist es auch möglich, dass über die Datenschnittstelle direkt vom Roboter die besagten roboterspezifischen Parameter heruntergeladen werden. So oder so ist es dadurch möglich, dass die Steuereinrichtung sich möglichst gut auf den betreffenden Roboter einstellen kann, welcher mittels der Steuereinrichtung gesteuert werden soll. Ferner ist es dadurch beispielsweise auch möglich, dass neben den roboterspezifischen Parametern beispielsweise auch einzelne Softwareblöcke oder Softwarepakete heruntergeladen werden können, sodass die Steuereinrichtung diese Softwareblöcke zur Erzeugung der Steuersignale verwenden kann.

Gemäß einer weiteren vorteilhaften Ausführungsform der Erfindung ist es vorgesehen, dass die Steuereinrichtung dazu eingerichtet ist, für die Arbeitsaufgabe eine Bahnplanung für den Roboter vorzunehmen und in Abhängigkeit davon die Steuersignale zu erzeugen. Über die fahrzeugseitige Steuereinrichtung kann also auch das Einrichten des Roboters insbesondere im Hinblick auf eine Bahnplanung verwendet werden, wobei die fahrzeugseitige Steuereinrichtung zusätzlich auch noch dazu ausgelegt sein kann, Interpolation bei der Bahnplanung vorzunehmen, eine Peripheriesteuerung von peripheren Einrichtungen des Roboters vorzunehmen und dergleichen. Sämtliche zum Einrichten des Roboters notwendige Steuerungshardware kann also durch die fahrzeugseitige Steuereinrichtung ersetzt werden. Dies spart wiederum erhebliche Kosten ein.

Eine weitere vorteilhafte Ausführungsform der Erfindung sieht vor, dass das Kraftfahrzeug eine Benutzerschnittstelle zum Steuern des Roboters aufweist. Beispielsweise kann dafür ein im Kraftfahrzeug verbauter Touchscreen oder dergleichen verwendet werden. Dadurch ist es möglich, dass am Roboter selbst ursprünglich ansonsten vorhandene Benutzerschnittstellen eingespart werden können. Die Kosten für den Roboter können dadurch weiter gesenkt werden, wobei die fahrzeugseitige Benutzerschnittstelle vorzugsweise auch für verschiedenste andere Aufgaben im Kraftfahrzeug, wie beispielsweise zur Steuerung eines Infotainmentsystems oder dergleichen verwendet werden kann.

Das erfindungsgemäße System umfasst das erfindungsgemäße Kraftfahrzeug oder eine vorteilhafte Ausführungsform des erfindungsgemäßen Kraftfahrzeugs und wenigstens einen Roboter, welcher eine Datenschnittstelle aufweist, die mit der Datenschnittstelle des Kraftfahrzeugs kompatibel ist.

Bei dem erfindungsgemäßen Verfahren zum Steuern eines Roboters mittels des erfindungsgemäßen Kraftfahrzeugs oder einer vorteilhaften Ausführungsform des erfindungsgemäßen Kraftfahrzeugs werden mittels der Steuereinrichtung des Kraftfahrzeugs für eine vorgegebene Arbeitsaufgabe Steuersignale zum Steuern des Roboters erzeugt und über die Datenschnittstelle an den Roboter übertragen und eine Sensorik des Kraftfahrzeugs erfasst eine Pose des Roboters und/oder Achsstellungen des Roboters und überträgt diesbezügliche Daten an die Steuereinrichtung, welche in Abhängigkeit von diesen Daten die Steuersignale erzeugt. Vorteilhafte Ausführungsformen des erfindungsgemäßen Kraftfahrzeugs sind als vorteilhafte Ausführungsformen des erfindungsgemäßen Verfahrens und umgekehrt anzusehen, wobei insbesondere das Kraftfahrzeug Mittel zur Durchführung der Verfahrensschritte aufweist.

Eine vorteilhafte Ausführungsform des erfindungsgemäßen Verfahrens sieht vor, dass der Roboter zum Durchführen wenigstens eines Produktionsschritts während der Herstellung des Kraftfahrzeugs eingesetzt wird. Alternativ oder zusätzlich ist es auch möglich, dass der Roboter oder ein anderer Roboter zum Betanken des Kraftfahrzeugs eingesetzt wird. Zudem ist es alternativ oder zusätzlich möglich, dass der Roboter oder ein anderer Roboter für eine Wartungsaufgabe am Kraftfahrzeug eingesetzt wird. Grundsätzlich ist es mittels des Verfahrens möglich, verschiedenste Roboter mittels der fahrzeugseitigen Steuereinrichtung anzusteuern, sei es während der Produktion des Kraftfahrzeugs, zu Wartungszwecken des Kraftfahrzeugs, zum Betanken des Kraftfahrzeugs oder für beliebige andere Aufgaben, welche Roboter insbesondere am Kraftfahrzeug durchführen können. Darüber hinaus ist es auch möglich, dass die fahrzeugseitige Steuereinrichtung dafür verwendet wird, einen Roboter anzusteuern, welcher nicht am Kraftfahrzeug selbst eine bestimmte Arbeitsaufgabe durchführt.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmalskombinationen sowie die nachfolgend in der Figurenbeschreibung und/oder in den Figuren alleine gezeigten Merkmale und Merkmalskombinationen sind nicht nur in der angegebenen Kombination, sondern auch in Alleinstellung verwendbar, ohne den Rahmen der Erfindung zu verlassen.

Die Zeichnung zeigt in:
- Fig. 1: eine schematische Darstellung eines Kraftfahrzeugs, welches eine Steuereinrichtung aufweist, die dazu eingerichtet ist, einen Roboter zu steuern; und in
- Fig. 2: eine schematische Darstellung des Roboters, wobei einzelne Funktionseinheiten des Roboters schematisch dargestellt sind.

In den Figuren sind gleiche oder funktionsgleiche Elemente mit den gleichen Bezugszeichen versehen worden.

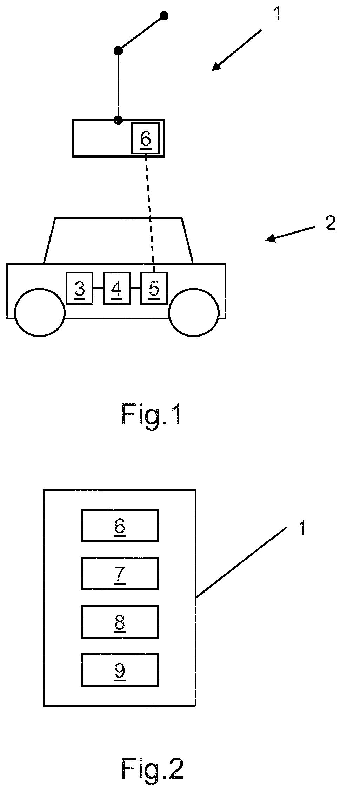

Ein Roboter 1 und ein Kraftfahrzeug 2 sind in einer stark schematisierten Darstellung in Fig. 1 gezeigt. Das Kraftfahrzeug 2 kann den Roboter 1 steuern. Zur Überwachung und Steuerung des Roboters 1 umfasst das Kraftfahrzeug 2 eine fahrzeugseitige Sensorik 3, eine fahrzeugseitige Steuereinrichtung 4 und eine fahrzeugseitige Datenschnittstelle 5. Die Steuereinrichtung 4 ist dazu eingerichtet, für eine vorgegebene Arbeitsaufgabe Steuersignale zum Steuern des Roboters 1 zu erzeugen und über die fahrzeugseitige Datenschnittstelle 5 an den Roboter 1 zu übertragen. Damit die Steuersignale von dem Kraftfahrzeug 2 zum Roboter 1 gelangen können, umfasst der Roboter 1 selbst eine roboterseitige Datenschnittstelle 6, die mit der fahrzeugseitigen Datenschnittstelle 5 kompatibel ist.

Die fahrzeugseitige Sensorik 3 ist dazu ausgelegt, eine Pose des Roboters 1 und/oder Achsstellungen des Roboters 1 zu erfassen und diesbezügliche Daten an die Steuereinrichtung 4 zu übertragen, welche ihrerseits dazu eingerichtet ist, in Abhängigkeit von diesen Daten die Steuersignale zu erzeugen. Unter Verwendung der fahrzeugseitigen Sensorik 3 ist es insbesondere auch möglich, eine Sicherheitsüberwachung des Roboters 1 während des Betriebs vorzunehmen, wobei in Abhängigkeit von der Sicherheitsüberwachung mittels der fahrzeugseitigen Steuereinrichtung 4 entsprechende Steuersignale zum Steuern des Roboters 1 erzeugt werden.

Die beiden Datenschnittstellen 5, 6 können dazu ausgelegt sein, die Steuersignale mittels eines kabellosen und/oder kabelgebundenen Übertragungsverfahrens zu übertragen bzw. zu empfangen. Grundsätzlich sind alle bekannten Arten von kabelgebundenen und kabellosen Übertragungsverfahren denkbar, sodass beispielsweise eine Übertragung der Steuersignale über ein Mobilfunknetz, über WLAN oder dergleichen möglich ist. Darüber hinaus können die Datenschnittstellen 5, 6 auch beispielsweise in Form eines Steckers und einer Buchse ausgebildet sein, sodass der Roboter 1 direkt mit dem Kraftfahrzeug 2 verkabelt werden kann.

In Fig. 2 ist der Roboter 1 noch einmal stark schematisiert dargestellt. Neben der roboterseitigen Datenschnittstelle 6 umfasst der Roboter 1 Antriebe 7, einen Antriebsverstärker 8 und eine Spannungsversorgung 9. Der Roboter 1 benötigt selbst also gar keine Steuerungs- bzw. Regelungshardware, da sämtliche Steuerungsaufgaben durch das Kraftfahrzeug 2, insbesondere durch die fahrzeugseitige Steuereinrichtung 4, übernommen werden. Der Roboter 1 kann dadurch besonders günstig hergestellt werden. Die fahrzeugseitige Steuereinrichtung 4 und die fahrzeugseitige Sensorik 3 können zudem dafür genutzt werden, fahrzeugseitige Funktionen, wie beispielsweise autonome Fahraufgaben, anderweitige Fahrerassistenzsysteme, Infotainmentsysteme und dergleichen zu überwachen und zu steuern. Die fahrzeugseitige Sensorik 3 und die fahrzeugseitige Steuereinrichtung 4 erfüllen also mindestens eine Doppelfunktionalität, nämlich die Überwachung und Steuerung des Kraftfahrzeugs 2 selbst und die Überwachung und Steuerung des Roboters 1. Das Kraftfahrzeug 2 ist also hardwareseitig nicht unbedingt anders ausgestattet, als dies bei bekannten Kraftfahrzeugen der Fall ist, welche nicht dazu eingerichtet sind, solche Roboter 1 zu steuern.

Die fahrzeugseitige Steuereinrichtung 4 ist zudem dazu eingerichtet, über die fahrzeugseitige Datenschnittstelle 3 roboterspezifische Parameter zum Steuern des Roboters 1 zu laden. Beispielsweise kann über die fahrzeugseitige Datenschnittstelle 5 ein Parametersatz zum Roboter 1 über eine Internetverbindung von einer Datenbank heruntergeladen werden. Alternativ oder zusätzlich ist es auch möglich, dass betreffende roboterspezifische Parameter, welche zum Steuern des Roboters 1 erforderlich sind, direkt vom Roboter 1 bezogen werden, indem ein entsprechender Datenaustausch über die Datenschnittstellen 5, 6 erfolgt. Insbesondere in Kenntnis der roboterspezifischen Parameter ist es möglich, dass die Steuereinrichtung 4 für eine bestimmte Arbeitsaufgabe auch eine Bahnplanung für den Roboter 1 vornimmt und in Abhängigkeit davon die besagten Steuersignale erzeugt.

Unter Nutzung der fahrzeugseitigen Hardware, insbesondere der fahrzeugseitigen Steuereinrichtung 4, ist es möglich, dass bereits während der Produktion des Kraftfahrzeugs 2 der Roboter 1 oder auch ein anderer Roboter angesteuert wird, beispielsweise um Schweißaufgaben oder auch Montageaufgaben während der Herstellung am Kraftfahrzeug 2 selbst vorzunehmen. Der in der Produktion eingesetzte Roboter 1 kann besonders kostengünstig sein, da dieser keine eigene Steuerungs- und/oder Regelungshardware benötigt. Auch nach der Fertigstellung des Kraftfahrzeugs 2 kann die fahrzeugseitige Steuereinrichtung 4 zur Steuerung des Roboters 1 oder anderer Roboter verwendet werden. Handelt es sich bei dem Kraftfahrzeug 2 beispielsweise um ein elektrisch angetriebenes Kraftfahrzeug, so kann die Steuereinrichtung 4 einen Tankroboter ansteuern, welcher beispielsweise ein Ladekabel vollautomatisch in das Kraftfahrzeug 2 einsteckt und eine Batterie des Kraftfahrzeugs 2 lädt. Genauso kann auch ein Tankroboter verwendet werden, um herkömmlichen Kraftstoff in Form von Benzin oder Diesel in das Kraftfahrzeug 2 einzufüllen. Darüber hinaus ist es beispielsweise auch möglich, dass die fahrzeugseitige Steuereinrichtung 4 den Roboter 1 oder einen anderen Roboter ansteuert, welcher Wartungsaufgaben am Kraftfahrzeug 2, beispielsweise im Zusammenhang mit einem Servicetermin oder dergleichen, vornimmt. Dadurch können auch in Servicewerkstätten besonders kostengünstige Roboter eingesetzt werden, da die eigentliche Steuerung dieser Roboter fahrzeugseitig durchgeführt werden kann. Darüber hinaus ist es mittels des Kraftfahrzeugs 2, insbesondere unter Nutzung der fahrzeugseitigen Steuereinrichtung 4, möglich, verschiedenste Roboter anzusteuern und zu regeln, auch wenn diese nicht direkt Aufgaben am Kraftfahrzeug 2 selbst durchführen.

## Patentansprüche

1. Kraftfahrzeug (2), umfassend eine Datenschnittstelle (5) zum Übertragen von Daten an einen Roboter (1),
wobei das Kraftfahrzeug (2) eine Steuereinrichtung (4) aufweist, welche dazu eingerichtet ist, für eine vorgegebene Arbeitsaufgabe Steuersignale zum Steuern des Roboters (1) zu erzeugen und über die Datenschnittstelle (5) an den Roboter (1) zu übertragen,
**dadurch gekennzeichnet, dass**
das Kraftfahrzeug (2) eine Sensorik (3) aufweist, welche dazu ausgelegt ist, eine Pose des Roboters (1) und/oder Achsstellungen des Roboters (1) zu erfassen und diesbezügliche Daten an die Steuereinrichtung (4) zu übertragen, welche dazu eingerichtet ist, in Abhängigkeit von diesen Daten die Steuersignale zu erzeugen, sodass das Kraftfahrzeug (2) dazu ausgebildet ist, die ohnehin im Kraftfahrzeug (2) verbaute Sensorik (3) noch dafür zu nutzen, die Pose des Roboters (1) und/oder die Achsstellung des Roboters (1) zu erfassen, um den Roboter (1) in Abhängigkeit davon fahrzeugseitig anzusteuern. anzusteuern,
wobei die fahrzeugseitige Sensorik auch für andere fahrzeugseitige Applikationen verwendet wird.

2. Kraftfahrzeug (2) nach Anspruch 1,
**dadurch gekennzeichnet, dass**
die Datenschnittstelle (5) dazu ausgelegt ist, die Steuersignale mittels eines kabellosen und/oder kabelgebundenen Übertragungsverfahrens an den Roboter (1) zu übertragen.

3. Kraftfahrzeug (2) nach einem der vorhergehenden Ansprüche,
**dadurch gekennzeichnet, dass**
die Steuereinrichtung (4) dazu eingerichtet ist, wenigstens eine Fahrzeugfunktion, insbesondere zum autonomen Fahren des Kraftfahrzeugs (2), zu steuern.

4. Kraftfahrzeug (2) nach einem der vorhergehenden Ansprüche,
**dadurch gekennzeichnet, dass**
die Steuereinrichtung (4) dazu eingerichtet ist, über die Datenschnittstelle (5) roboterspezifische Parameter zum Steuern des Roboters (1) auf die Steuereinrichtung (4) zu laden.

5. Kraftfahrzeug (2) nach einem der vorhergehenden Ansprüche,
**dadurch gekennzeichnet, dass**
die Steuereinrichtung (4) dazu eingerichtet ist, für die Arbeitsaufgabe eine Bahnplanung für den Roboter (1) vorzunehmen und in Abhängigkeit davon die Steuersignale zu erzeugen.

6. Kraftfahrzeug (2) nach einem der vorhergehenden Ansprüche,
**dadurch gekennzeichnet, dass**
das Kraftfahrzeug (2) eine Benutzerschnittstelle zum Steuern des Roboters (1) aufweist.

7. System mit einem Kraftfahrzeug (2) nach einem der vorhergehenden Ansprüche und wenigstens einem Roboter (1), welcher eine Datenschnittstelle (6) aufweist, die mit der Datenschnittstelle (5) des Kraftfahrzeugs (2) kompatibel ist.

8. Verfahren zum Steuern eines Roboters (1) mittels eines Kraftfahrzeugs (2) nach einem der Ansprüche 1 bis 6, bei welchem die Steuereinrichtung (4) des Kraftfahrzeugs (2) für eine vorgegebene Arbeitsaufgabe Steuersignale zum Steuern des Roboters (1) erzeugt und über die Datenschnittstelle (5) an den Roboter (1) überträgt und eine Sensorik (3) des Kraftfahrzeugs (2) eine Pose des Roboters (1) und/oder Achsstellungen des Roboters (1) erfasst und diesbezügliche Daten an die Steuereinrichtung (4) überträgt, welche in Abhängigkeit von diesen Daten die Steuersignale erzeugt, sodass das Kraftfahrzeug (2) die ohnehin im Kraftfahrzeug (2) verbaute Sensorik (3) noch dafür nutzt, die Pose des Roboters (1) und/oder die Achsstellung des Roboters (1) zu erfassen, um den Roboter (1) in Abhängigkeit davon fahrzeugseitig anzusteuern, wobei die fahrzeugseitige Sensorik auch für andere fahrzeugseitige Applikationen verwendet wird.

9. Verfahren nach Anspruch 8,
**dadurch gekennzeichnet, dass**
der Roboter (1) zum Durchführen wenigstens eines Produktionsschritts während der Herstellung des Kraftfahrzeugs (2) eingesetzt wird.

10. Verfahren nach Anspruch 8 oder 9,
**dadurch gekennzeichnet, dass**
der Roboter (1) oder ein anderer Roboter zum Betanken des Kraftfahrzeugs (2) eingesetzt wird.

11. Verfahren nach einem der Ansprüche 8 bis 10,
**dadurch gekennzeichnet, dass**
der Roboter (1) oder ein anderer Roboter für eine Wartungsaufgabe am Kraftfahrzeug (2) eingesetzt wird.

## Claims

1. Motor vehicle (2) comprising a data interface (5) for transmitting data to a robot (1),
wherein the motor vehicle (2) comprises a controller (4) that is configured to produce control signals for controlling the robot (1) for a specified working task and to transmit said control signals to the robot (1) via the data interface (5),
**characterized in that**
the motor vehicle (2) comprises a sensor arrangement (3) that is designed to detect a posture of the robot (1) and/or axle positions of the robot (1) and to transmit related data to the controller (4), which is configured to produce the control signals depending on said data, such that the motor vehicle (2) is designed to use the sensor arrangement (3) already installed in the motor vehicle (2) also to detect the posture of the robot (1) and/or the axle position of the robot (1) in order to actuate the robot (1) from the vehicle depending thereon, wherein the vehicle sensor arrangement is also used for other vehicle applications.

2. Motor vehicle (2) according to Claim 1,
**characterized in that**
the data interface (5) is designed to transmit the control signals to the robot (1) by means of a wireless and/or cable-based transmission method.

3. Motor vehicle (2) according to either of the preceding claims,
**characterized in that**
the controller (4) is configured to control at least one vehicle function, in particular for autonomous driving of the motor vehicle (2).

4. Motor vehicle (2) according to one of the preceding claims,
**characterized in that**
the controller (4) is configured to load robot-specific parameters for controlling the robot (1) onto the controller (4) via the data interface (5).

5. Motor vehicle (2) according to one of the preceding claims,
**characterized in that**
the controller (4) is configured to carry out path planning for the robot (1) for the working task and to produce the control signals depending on said path planning.

6. Motor vehicle (2) according to one of the preceding claims,
**characterized in that**
the motor vehicle (2) comprises a user interface for controlling the robot (1).

7. System with a motor vehicle (2) according to one of the preceding claims and at least one robot (1) comprising a data interface (6) that is compatible with the data interface (5) of the motor vehicle (2).

8. Method for controlling a robot (1) by means of a motor vehicle (2) according to one of Claims 1 to 6, in which the controller (4) of the motor vehicle (2) produces control signals for controlling the robot (1) for a specified working task and transmits said control signals to the robot (1) via the data interface (5), and a sensor arrangement (3) of the motor vehicle (2) detects a posture of the robot (1) and/or axle positions of the robot (1) and transmits related data to the controller (4), which produces the control signals depending on said data, such that the motor vehicle (2) uses the sensor arrangement (3) already installed in the motor vehicle (2) also to detect the posture of the robot (1) and/or the axle position of the robot (1) in order to actuate the robot (1) from the vehicle depending thereon, wherein the vehicle sensor arrangement is also used for other vehicle applications.

9. Method according to Claim 8,
**characterized in that**
the robot (1) is used for carrying out at least one production step during the manufacture of the motor vehicle (2).

10. Method according to Claim 8 or 9,
**characterized in that**
the robot (1) or another robot is used for refuelling the motor vehicle (2).

11. Method according to one of Claims 8 to 10,
**characterized in that**
the robot (1) or another robot is used for a maintenance task on the motor vehicle (2).

## Revendications

1. Véhicule automobile (2), comprenant une interface de données (5) destinée à la transmission de données à un robot (1),
le véhicule automobile (2) possédant un dispositif de commande (4), lequel est conçu pour, pour une tâche de travail prédéfinie, générer des signaux de commande destinés à commander le robot (1) et les transmettre au robot (1) par le biais de l'interface de données (5),
**caractérisé en ce que**
le véhicule automobile (2) possède un système de détection (3), lequel est conçu pour détecter une posture du robot (1) et/ou des positions d'axes du robot (1) et transmettre des données en rapport avec celles-ci au dispositif de commande (4), lequel est conçu pour générer les signaux de commande en fonction de ces données, de sorte que le véhicule automobile (2) est configuré pour utiliser le système de détection (3), qui est de toute façon installé dans le véhicule automobile (2), également pour détecter la posture du robot (1) et/ou la position d'axes du robot (1) afin de commander le robot (1) côté véhicule en fonction de celles-ci, le système de détection côté véhicule étant également employé pour d'autres applications côté véhicule.

2. Véhicule automobile (2) selon la revendication 1, **caractérisé en ce que** l'interface de données (5) est conçue pour transmettre les signaux de commande au robot (1) au moyen d'un procédé de transmission sans fil et/ou filaire.

3. Véhicule automobile (2) selon l'une des revendications précédentes, **caractérisé en ce que** le dispositif de commande (4) est conçu pour commander au moins une fonction de véhicule, notamment servant à la conduite autonome du véhicule automobile (2).

4. Véhicule automobile (2) selon l'une des revendications précédentes, **caractérisé en ce que** le dispositif de commande (4) est conçu pour charger sur le dispositif de commande (4), par le biais de l'interface de données (5), des paramètres de commande spécifiques au robot en vue de commander le robot (1).

5. Véhicule automobile (2) selon l'une des revendications précédentes, **caractérisé en ce que** le dispositif de commande (4) est conçu pour, pour la tâche de travail, procéder à une planification de trajectoire pour le robot (1) et générer les signaux de commande en fonction de celle-ci.

6. Véhicule automobile (2) selon l'une des revendications précédentes, **caractérisé en ce que** le véhicule automobile (2) possède une interface utilisateur servant à commander le robot (1).

7. Système comprenant un véhicule automobile (2) selon l'une des revendications précédentes et au moins un robot (1), lequel possède une interface de données (6) qui est compatible avec l'interface de données (5) du véhicule automobile (2).

8. Procédé de commande d'un robot (1) au moyen d'un véhicule automobile (2) selon l'une des revendications 1 à 6, avec lequel le dispositif de commande (4) du véhicule automobile (2) génère des signaux de commande destinés à commander le robot (1) pour une tâche de travail prédéfinie et les transmet au robot (1) par le biais de l'interface de données (5), et un système de détection (3) du véhicule automobile (2) détecte une posture du robot (1) et/ou des positions d'axes du robot (1) et transmet des données en rapport avec celles-ci au dispositif de commande (4), lequel génère les signaux de commande en fonction de ces données, de sorte que le véhicule automobile (2) utilise le système de détection (3), qui est de toute façon installé dans le véhicule automobile (2), également pour détecter la posture du robot (1) et/ou la position d'axes du robot (1) afin de commander le robot (1) côté véhicule en fonction de celles-ci, le système de détection côté véhicule étant également employé pour d'autres applications côté véhicule.

9. Procédé selon la revendication 8, **caractérisé en ce que** le robot (1) est utilisé pour exécuter au moins une étape de production pendant la fabrication du véhicule automobile (2).

10. Procédé selon la revendication 8 ou 9, **caractérisé en ce que** le robot (1) ou un autre robot est utilisé pour l'avitaillement du véhicule automobile (2).

11. Procédé selon l'une des revendications 8 à 10, **caractérisé en ce que** le robot (1) ou un autre robot est utilisé pour une tâche de maintenance sur le véhicule automobile (2).
